# EUROPÄISCHE PATENTSCHRIFT

(11) **EP 0 575 871 B1**
(45) Veröffentlichungstag und Bekanntmachung des Hinweises auf die Patenterteilung: **13.03.1996**
(21) Anmeldenummer: 93109565.7
(22) Anmeldetag: 16.06.1993
(51) Int. Cl.: C08J 9/18

(54) **Verfahren zur Herstellung expandierbarer thermoplastischer Polymerisate durch Nachimprägnierung**
Process of preparing expandable thermoplastic polymers by postimpregnation
Procédé pour la préparation des polymères thermoplastiques expansibles par postimprégnation

(30) Priorität: 20.06.1992 DE 4220242
(43) Veröffentlichungstag der Anmeldung: 29.12.1993
(73) Patentinhaber: BASF Aktiengesellschaft, D-67063 Ludwigshafen (DE)
(72) Erfinder: Witt, Michael, Dr., D-6700 Ludwigshafen (DE); Hahn, Klaus, Dr., D-6719 Kirchheim (DE); Lorenz, Maria, Dr., D-6700 Ludwigshafen (DE)

(56) Entgegenhaltungen:
- EP-A- 0 095 109
- EP-A- 0 186 988
- DATABASE WPIL Derwent Publications Ltd., London, GB; AN 77-67319Y(38) & JP-A-50 1096 966 (SEKISUI KASEIHIN) 29. August 1975
- PATENT ABSTRACTS OF JAPAN vol. 012, no. 410 (C-540)28. Oktober 1988& JP-A-63 146 944 (SEKISUI PLASTICS CO. LTD.) 18. Juni 1988

## Beschreibung

Die Erfindung betrifft ein Verfahren zur Herstellung expandierbarer thermoplastischer Polymerisate durch Nachimprägnierung mit einem Treibmittel in wäßriger Suspension in Gegenwart einer Mischung von Magnesiumpyrophosphat und einem sulfonatgruppenhaltigen Extender als Suspensionsstabilisator (auch Dispergiermittel genannt) in einem Kessel.

Aus der DE-A 25 34 833 und der DE-A 26 21 448 sind Verfahren zur Herstellung kugelförmiger, expandierbarer Styrolpolymerisate bekannt, bei denen man stranggranulierte Teilchen in einem Druckreaktor in Wasser und in Gegenwart eines organischen oder anorganischen Suspensionsstabilisators oder Mischungen davon suspendiert und diese bis zu 5 Stunden bei Temperaturen oberhalb des Erweichungspunktes und Drucken bis 14 bar behandelt.

Als Suspensionsstabilisatoren werden hierbei üblicherweise neben Molekülkolloiden wie Polyvinylalkohol (PVA) und Polyvinylpyrrolidon (PVP) schwerlösliche Salze wie Ca₃(PO₄)₂ (sogenannte Pickering-Salze) in Kombination mit einem Extender wie Dodecylbenzolsulfonat eingesetzt.

Unter Extender werden hierbei Verbindungen verstanden, welche die Fähigkeit der schwerlöslichen anorganischen Verbindungen, Suspensionen zu stabilisieren, erhöhen. Die Extender bewirken eine teilweise Hydrophobierung des an sich hydrophilen anorganischen Pickering-Salzes.

Aus der EP-B 95 109 ist ein Verfahren zur Herstellung expandierter Teilchen aus einem Polyolefinharz bekannt. Die Polyolefinteilchen und ein flüchtiges Treibmittel werden in Wasser in Gegenwart eines Dispergiermittels innerhalb eines druckfesten Behälters dispergiert. Das Gemisch wird erhitzt und anschließend durch Überführen in eine Atmosphäre mit einem niedrigeren Druck geschäumt. Als Dispergiermittel können beispielsweise feine Pulver von anorganischen Substanzen verwendet werden, die in Wasser schlecht löslich sind, wie Calciumphosphat, Magnesiumpyrophosphat und Zinkcarbonat. Als Dispergiermittel können auch Mischungen dieser feinen Pulver mit einer kleinen Menge eines Natriumalkylbenzolsulfonats, Natrium-α-olefinsulfonats, Natriumalkylsulfonats oder ähnlichen anionischen oberflächenaktiven Verbindungen verwendet werden.

Die EP-A-186988 offenbart ein Verfahren zur Herstellung expandierbarer Teilchen eines Styrol-Maleinsäureanhydrid-Copolymers unter Verwendung von Magnesiumpyrophosphat als Suspendiermittel.

Es hat sich gezeigt, daß in den Verfahren zur Herstellung expandierbarer oder expandierter thermoplastischer Polymerisate viele als Dispergiermittel bekannte Substanzen nicht geeignet sind.

Beispielsweise zeigten eigene Untersuchungen, daß bei Verwendung von kommerziell erhältlichem Magnesiumpyrophosphat in den bekannten Verfahren zur Herstellung von expandierbaren Styrolpolymerisaten die Ansätze in der Regel koagulieren.

Darüber hinaus erweisen sich viele Suspensionsstabilisatoren als ungeeignet, wenn in den Verfahren zur Herstellung expandierbarer thermoplastischer Polymerisate Partikel aus Recyclat eingesetzt werden, wie es beispielsweise bei der Wiederaufarbeitung von Polystyrolschaumstoffen durch Aufschmelzen und Entgasen in einem Extruder und anschließende Granulierung anfällt.

Das Recyclat enthält in der Regel die dem thermoplastischen Polymeren beigegebenen Zusatzstoffe in unterschiedlicher Art und Menge und kann darüber hinaus auch verunreinigt sein. Bei den bekannten Verfahren behindern oder verhindern diese Zusatzstoffe und Verunreinigungen häufig die Herstellung expandierbarer thermoplastischer Polymerisate.

Aufgabe der vorliegenden Erfindung war es daher, Verfahren zur Herstellung von expandierbaren thermoplastischen Polymerisaten aufzuzeigen, welche die geschilderten Nachteile nicht länger aufweisen.

Diese Aufgabe wird überraschend gelöst durch ein Verfahren zur Herstellung expandierbarer thermoplastischer Polymerisate durch Nachimprägnierung mit einem Treibmittel in wäßriger Suspension in Gegenwart einer Mischung von Magnesiumpy-Rophosphat und einem sulfonatgruppenhaltigen Extender als Suspensionsstabilisator in einem Kessel, wobei
a) das Magnesiumpyrophosphat im gleichen Kessel bei einer Temperatur unterhalb von 50°C durch Zugabe eines festen Magnesiumsalzes in einer Menge entsprechend einem mindestens 3 %igen stöchiometrischen Überschuß, bezogen auf Pyrophosphat, zu einer wäßrigen Lösung eines Pyrophosphats hergestellt wird,
b) das Suspensionsmedium auf Temperaturen im Bereich zwischen 70 und 140°C erhitzt wird, und
c) das Treibmittel in diesem Temperaturbereich zugefügt wird.

Thermoplastische Polymerisate im Sinne der Erfindung sind beispielsweise Polyolefine oder Polyvinylaromaten. Erfindungsgemäß werden bevorzugt Polyvinylaromaten wie Styrolpolymerisate eingesetzt.

Die thermoplastischen Polymerisate werden im erfindungsgemäßen Verfahren im allgemeinen in Form von Partikeln eingesetzt. In der Regel werden Granulate oder Suspensionspolymerisate mit Partikelmassen zwischen 0,5 und 50 mg/Partikel eingesetzt.

Polyolefine im Sinne der Erfindung sind kristalline Olefinpolymerisate, deren Röntgenkristallinität bei 25°C über 25 % liegt. Für das Verfahren eignen sich Polyethylene niedriger, mittlerer und hoher Dichte, beispielsweise der Dichte 0,916 bis 0,965, vorzugsweise 0,920 bis 0,935 g/cm³, wie sie nach Hoch-, Nieder- und Mitteldruckverfahren hergestellt werden, Polypropylen sowie Ethylen- und Propylencopolymere, die mindestens 50 Mol-% Ethylen- und/oder Propylen-Einheiten enthalten. Geeignete Comonomere sind beispielsweise α-Alkene mit bis zu 12 Kohlenstoffatomen, wie Propylen, Buten, Penten, Hexen, Octen, ferner Vinylester, wie Vinylacetat, Ester der Acrylsäure, Methacrylsäure, Maleinsäure oder Fumarsäure von Alkoholen, die 1 bis 8 C-Atome enthalten. Die Polyolefine besitzen im allgemeinen einen Schmelzindex MFI (230; 2,16) (nach DIN 53 735) zwischen 0,5 und 15, vorzugsweise zwischen 1 und 12 und einen Schmelzbereich zwischen 100°C und 170°C, sowie eine Scherviskosität zwischen 1 x 10³ und 1 x 10⁶, gemessen in einem Rotationsviskosimeter bei 150°C und einem Kreisfrequenzbereich von 10⁻ bis 10s⁻¹. Auch Mischungen verschiedener Polyolefine können verwendet werden.

Bevorzugt eingesetzt werden Ethylen-Propylen-Copolymere und Copolymere von Ethylen, Propylen und einem C₄- bis C₈-α-Olefin.

Besonders bevorzugte Ethylen-Propylen-Copolymere sind Copolymere aus 0,5 bis 6 Gew.-% Ethylen und 94 bis 99,5 Gew.-% Propylen.

Besonders bevorzugte Copolymere von Ethylen, Propylen und einem C₄- bis C₈-α-Olefin sind Copolymere aus 0,5 bis 6 Gew.-%, vorzugsweise 1 bis 6 Gew.-%, insbesondere 1,5 bis 6 Gew.-% Ethylen, 88 bis 99 Gew.-%, vorzugsweise 89 bis 98 Gew.-%, insbesondere 90 bis 97 Gew.-% Propylen und 0,5 bis 6 Gew.-%, vorzugsweise 1 bis 6 Gew.-%, insbesondere 1 bis 5 Gew.-% eines C₄- bis C₈-α-Olefins, wie Buten-1, Penten-1, Hexen-1, Hepten-1 oder Octen-1. Die Copolymeren sollen einen G-Modul von 100 bis 800, vorzugsweise 100 bis 700, insbesondere 150 bis 600 N/mm aufweisen.

Styrolpolymerisate im Sinne der Erfindung sind Polystyrol und Mischpolymerisate des Styrols mit anderen olefinisch ungesättigten Verbindungen, die mindestens 50 Gewichtsteile Styrol einpolymerisiert enthalten. Im erfindungsgemäßen Verfahren kommen daher als Comonomere z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabrom-cyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die erfindungsgemäß hergestellten expandierbaren Styrolpolymerisate aufgebracht.

Im erfindungsgemäßen Verfahren werden als Treibmittel, bezogen auf das thermoplastische Polymerisat, 1 bis 10 Gew.-%, vorzugsweise 3 bis 8 Gew.-%, eines C₃- bis C₉-Kohlenwasserstoffs (wie Propan, Butan, Isobutan, n-Pentan, i-Pentan, Neopentan und/oder Hexan) und/oder Kohlendioxid eingesetzt.

Bei Verwendung von Kohlendioxid als Treibmittel oder Treibmittelbestandteil enthält das thermoplastische Polymerisat vorzugsweise einen Kohlendioxid-Absorber gemäß der deutschen Patentanmeldung P 41 37 405.3.

Erfindungswesentlich ist, daß das Magnesiumpyrophosphat im gleichen Kessel, in dem die Nachimprägnierung stattfindet, bei einer Temperatur unterhalb von 50°C durch Zugabe eines festen Magnesiumsalzes in einer Menge entsprechend einem mindestens 3 %igen stöchiometrischen Überschuß, bezogen auf Pyrophosphat, zu einer wäßrigen Lösung eines Pyrophosphats hergestellt wird. Vorzugsweise wird das Magnesiumsalz in einer Menge entsprechend einem mindestens 5 %igen, besonders bevorzugt mindestens 10 %igen stöchiometrischen Überschuß, bezogen auf Pyrophosphat, eingesetzt.

Vorzugsweise wird die Bildung von Magnesiumpyrophoshat unter Vorlage von gelöstem Na₄P₂O₇ und anschließender Zugabe von festem MgSO₄ · 7H₂O durchgeführt.

Im erfindungsgemäßen Verfahren wird Magnesiumpyrophosphat in der Regel in einer Konzentration zwischen 0,05 und 2,0, vorzugsweise zwischen 0,1 und 1,0 und besonders bevorzugt zwischen 0,2 und 0,5 Gew.-%, bezogen auf die wäßrige Phase, eingesetzt.

Im erfindungsgemäßen Verfahren werden Sulfonatgruppen enthaltende Extender eingesetzt. Zu diesen Extendern gehören beispielsweise Natriumdodecylbenzolsulfonat, langkettige Alkylsulfonate, Vinylsulfonat, Diisobutylnaphthalinsulfonat.

Als Extender werden erfindungsgemäß bevorzugt Alkalisalze der Dodecylbenzolsulfonsäure und/oder Alkalisalze eines Gemisches von C₁₂-C₁₇-Alkylsulfonsäuren eingesetzt. Ein besonders geeignetes Gemisch von C₁₂-C₁₇-Alkylsulfonaten besteht aus überwiegend sekundären Natriumalkylsulfonaten mit der mittleren Kettenlänge C₁₅, das bis zu 0,2 Gew.-% organisch gebundenes Chlor enthält. Ein derartiges Gemisch wird unter der Bezeichnung Mersolat^{®}K 30 von der Firma Bayer AG vertrieben.

Die Extender werden in der Regel in Mengen zwischen 2 und 20, vorzugsweise 3 bis 7 Gew.-%, bezogen auf Magnesiumpyrophosphat, eingesetzt.

Im erfindungsgemäßen Verfahren wird das Suspensionsmedium nach der in situ-Herstellung des Magnesiumpyrophosphats auf eine Temperatur im Bereich zwischen 70°C und 140°C erhitzt.

Erfindungswesentlich ist, daß das Treibmittel in diesem Temperaturbereich zugefügt wird. Vorzugsweise wird das Treibmittel zugefügt, wenn die Temperatur im Kessel zwischen 100 und 140°C beträgt.

Zur Imprägnierung mit dem Treibmittel wird das thermoplastische Polymere auf an sich bekannte Weise (vgl. DE-A 25 34 833, DE-A 26 21 448, EP-A 53 333, EP-B 95 109) in Gegenwart des Treibmittels bei Temperaturen in der Nähe des Erweichungspunktes für eine bestimmte Zeitdauer gehalten.

Die hierbei erhaltenen expandierbaren thermoplastischen Polymerisate können nach Abkühlen des Kesselinhaltes auf bekannte Weise isoliert und weiterverarbeitet werden.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z. B. mit Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Wenn als thermoplastische Polymerisate Polyolefine verwendet werden, werden in der Regel die expandierbaren Partikel nicht isoliert. Die treibmittelhaltigen Polyolefinpartikel werden stattdessen in der Regel ohne vorherige Abkühlung des Kesselinhaltes durch Überführung in eine Atmosphäre niedrigeren Drucks zu vorgeschäumten Teilchen aufgeschäumt.

Die vorgeschäumten Teilchen können dann nach üblichen Verfahren zu Schaum-Formteilen mit einer Dichte von 0,005 bis 0,1 g/cm³ ausgeschäumt werden.

Das erfindungsgemäße Verfahren hat zahlreiche Vorteile. Es erweist sich als sehr unempfindlich gegenüber Zusatzstoffen im thermoplastischen Polymerisat und/oder Verunreinigungen. Bei Durchführung des Verfahrens kommt es zu keiner Koagulation des Ansatzes und nur zu sehr wenigen Zusammenläufern von mehreren Partikeln. Das resultierende expandierbare thermoplastische Polymerisat zeichnet sich durch eine nahezu ideale Kugelgestalt und durch sehr gute Verarbeitungseigenschaften aus. Bei der weiteren Verarbeitung ist beispielsweise keine Abwaschung des Suspensionsstabilisators durch eine Säurewäsche wie beispielsweise im Falle von Calciumphosphat erforderlich.

Die in den Beispielen genannten Teile und Prozente beziehen sich auf das Gewicht.

### Beispiel und Vergleichsbeispiele 1 bis 6

### Beispiel

In einem Kessel mit einem Fassungsvermögen von 50 l wurden 25 l Wasser vorgelegt. Hierzu wurden 90,5 g Na₄P₂O₇ in fester Form zugegeben und unter Rühren innerhalb von 10 Minuten aufgelöst. Danach wurden 185 g MgSO₄ · 7H₂O zugegeben und für weitere 10 Minuten gerührt. Anschließend wurden 450 g einer 1 %igen Lösung eines Gemisches von C₁₂-C₁₇-Alkylsulfonaten aus überwiegend sekundären Natriumalkylsulfonaten mit der mittleren Kettenlänge C₁₅ (Mersolat®K 30 der Fa. Bayer AG) und 14 kg des mit dem Treibmittel zu imprägnierenden Polystyrol-Granulats (Partikelgewicht 0,5 bis 50 mg) zugegeben. Der Kessel wurde dicht verschlossen und der Inhalt innerhalb von 4 Stunden von 25 auf 100°C erwärmt. Anschließend wurde innerhalb von 4 Stunden auf 125°C erwärmt und der Kesselinhalt für 4 Stunden bei dieser Temperatur belassen. Nachdem die Kesselinnentemperatur 108°C erreicht hatte, wurden 930 g Pentan zudosiert.

Nach dem Abkühlen wurde der Kesselinhalt filtriert und die erhaltenen treibmittelhaltigen Polystyrolpartikel isoliert.

Es gab keinerlei Zusammenlaufen von mehreren Partikeln. Die Partikel zeichneten sich außerdem durch eine ideale Kugelform aus.

### Vergleichsbeispiel 1

Es wurde wie im Beispiel gearbeitet, das Treibmittel jedoch von Anfang an mit vorgelegt. Der Ansatz koagulierte, so daß die Herstellung von treibmittelhaltigen Polystyrolpartikeln nicht möglich war.

### Vergleichsbeispiel 2

Es wurde wie im Beispiel gearbeitet, jedoch unter Verwendung von 167,8 g MgSO₄ · H₂O, d. h. einer stöchiometrischen Menge des Magnesiumsalzes. Der Ansatz koagulierte, so daß die Herstellung von treibmittelhaltigen Polystyrolpartikeln nicht möglich war.

### Vergleichsbeispiel 3

Es wurde wie im Beispiel gearbeitet, wobei jedoch Magnesiumpyrophosphat vor Beginn der Nachimprägnierung durch Zusammengeben von wäßrigen Lösungen von MgSO₄ · 7H₂O und Na₄P₂O₇ außerhalb des zur Nachimprägnierung verwendeten Kessels hergestellt wurde. Das derart gefällte Magnesiumpyrophosphat wurde dem Ansatz in fester Form zugefügt.

Der Ansatz koagulierte, so daß die Herstellung von treibmittelhaltigen Polystyrolpartikeln nicht möglich war.

### Vergleichsbeispiel 4

Es wurde gearbeitet wie im Beispiel, jedoch unter Verwendung von 0,3 Gew.-%, bezogen auf die wäßrige Phase, Calciumphosphat (Ca₃(PO₄)₂; TCP). Es traten viele Zusammenläufe auf und die erhaltenen Perlen waren stark deformiert.

### Vergleichsbeispiele 5 und 6

Es wurde wie im Beispiel verfahren, jedoch unter Verwendung von 0,3 Gew.-%, bezogen auf die wäßrige Phase, kommerziellem Magnesiumpyrophosphat von unterschiedlichen Herstellern (Vergleichsbeispiel 5 bzw. 6). Im einen Fall kam es zu einer Koagulation des Ansatzes. Im anderen Fall wurden viele Zusammenläufe und stark deformierte Perlen beobachtet.

## Patentansprüche

1. Verfahren zur Herstellung expandierbarer thermoplastischer Polymerisate durch Nachimprägnierung mit einem Treibmittel in wäßriger Suspension in Gegenwart einer Mischung von Magnesiumpyrophosphat und einem sulfonatgruppenhaltigen Extender als Suspensionsstabilisator in einem Kessel, dadurch gekennzeichnet, daß
a) das Magnesiumpyrophosphat im gleichen Kessel bei einer Temperatur unterhalb von 50°C durch Zugabe eines festen Magnesiumsalzes in einer Menge entsprechend einem mindestens 3 %igen stöchiometrischen Überschuß, bezogen auf Pyrophosphat, zu einer wäßrigen Lösung eines Pyrophosphats hergestellt wird,
b) das Suspensionsmedium auf eine Temperatur im Bereich zwischen 70 und 140°C erhitzt wird, und
c) das Treibmittel in diesem Temperaturbereich zugefügt wird.

2. Verfahren nach Anspruch 1, dadurch gekennzeichnet, daß als Treibmittel ein C₃- bis C₉-Kohlenwasserstoff und/oder Kohlendioxid verwendet wird.

3. Verfahren nach Anspruch 1 oder 2, dadurch gekennzeichnet, daß das für die Herstellung des Magnesiumpyrophosphats verwendete Magnesiumsalz in einer Menge entsprechend einem mindestens 10 %igen stöchiometrischen Überschuß, bezogen auf das Pyrophosphat, eingesetzt wird.

4. Verfahren nach einem der Ansprüche 1 bis 3, dadurch gekennzeichnet, daß das Treibmittel bei einer Temperatur zwischen 100 und 140°C zugefügt wird.

5. Verfahren nach einem der Ansprüche 1 bis 4, dadurch gekennzeichnet, daß als thermoplastisches Polymerisat ein Polystyrol oder Styrolcopolymerisat mit einem Gehalt von mindestens 50 Gew.-% einpolymerisiertem Styrol verwendet wird.

6. Verfahren nach einem der Ansprüche 1 bis 5, dadurch gekennzeichnet, daß der Gehalt an Magnesiumpyrophosphat 0,05 bis 2 Gew.-%, bezogen auf die wäßrige Phase, beträgt.

7. Verfahren nach einem der Ansprüche 1 bis 6, dadurch gekennzeichnet, daß der sulfonatgruppenhaltige Extender in einer Menge von 2 bis 20 Gew.-%, bezogen auf Magnesiumpyrophosphat, eingesetzt wird.

8. Verfahren nach Anspruch 7, dadurch gekennzeichnet, daß der Extender in einer Menge von 3 bis 7 Gew.-%, bezogen auf Magnesiumpyrophosphat, eingesetzt wird.

## Claims

1. A process for the preparation of expandable thermoplastic polymers by post-impregnation with a blowing agent in aqueous suspension in the presence of a mixture of magnesium pyrophosphate and a sulfonate group-containing extender as suspension stabilizer in a reactor, which comprises
a) preparing the magnesium pyrophosphate in the same reactor at below 50°C by adding a solid magnesium salt in an amount corresponding to an at least 3% stoichiometric excess, based on pyrophosphate, to an aqueous solution of a pyrophosphate,
b) heating the suspension medium to from 70 to 140°C and
c) adding the blowing agent in this temperature range.

2. A process as claimed in claim 1, wherein the blowing agent used is a C₃- to C₉-hydrocarbon and/or carbon dioxide.

3. A process as claimed in claim 1 or 2, wherein the magnesium salt used for the preparation of the magnesium pyrophosphate is employed in an amount corresponding to an at least 10% stoichiometric excess, based on the pyrophosphate.

4. A process as claimed in any of claims 1 to 3, wherein the blowing agent is added at from 100 to 140°C.

5. A process as claimed in any of claims 1 to 4, wherein the thermoplastic polymer used is a polystyrene or styrene copolymer containing at least 50% by weight of copolymerized styrene.

6. A process as claimed in any of claims 1 to 5, wherein the magnesium pyrophosphate content is from 0.05 to 2% by weight, based on the aqueous phase.

7. A process as claimed in any of claims 1 to 6, wherein the sulfonate group-containing extender is employed in an amount of from 2 to 20% by weight, based on magnesium pyrophosphate.

8. A process as claimed in claim 7, wherein the extender is employed in an amount of from 3 to 7% by weight, based on magnesium pyrophosphate.

## Revendications

1. Procédé de préparation de polymérisats thermoplastiques, expansibles par post-imprégnation avec un agent gonflant, en suspension aqueuse en présence d'un mélange de pyrophosphate de magnésium et d'un diluant comprenant des groupes sulfonate, comme stabilisateur de suspension dans une chaudière, caractérisé en ce que,
a) le pyrophosphate de magnésium est préparé dans la même chaudière, à une température inférieure à 50°C par addition d'un sel de magnésium solide en une quantité correspondant à un excès stoechiométrique d'au moins 3 %, par rapport au pyrophosphate, pour donner une solution aqueuse d'un pyrophosphate,
b) le milieu de suspension est chauffé à une température dans la plage comprise entre 70 et 140°C, et
c) le milieu gonflant est amené dans cette plage de température.

2. Procédé selon la revendication 1, caractérisé en ce qu'on utilise, comme milieu gonflant, un hydrocarbure en C3 à C9 et/ou du dioxyde de carbone.

3. Procédé selon la revendication 1 ou 2, caractérisé en ce que le sel de magnésium utilisé pour la préparation du pyrophosphate de magnésium est introduit en une quantité correspondant à un excès stoechiométrique d'au moins 10 % par rapport au pyrophosphate.

4. Procédé selon l'une des revendications 1 à 3, caractérisé en ce que l'agent gonflant est amené à une température comprise entre 100 et 140°C.

5. Procédé selon l'une des revendications 1 à 4, caractérisé en ce que l'on utilise, comme polymérisat thermoplastique, un polystyrène ou un copolymérisat de styrène, ayant une teneur d'au moins 50 % en poids de styrène polymérisé dans la masse.

6. Procédé selon l'une des revendications 1 à 5, caractérisé en ce que la teneur en pyrophosphate de magnésium est de 0,05 à 2 % en poids par rapport à la phase aqueuse.

7. Procédé selon l'une des revendications 1 à 6, caractérisé en ce que le diluant contenant des groupes sulfonate est utilisé en une quantité allant de 2 à 20 % en poids par rapport au pyrophosphate de magnésium.

8. Procédé selon la revendication 7, caractérisé en ce que le diluant est utilisé en une quantité comprise entre 3 et 7 % en poids par rapport au pyrophosphate de magnésium.
